# EUROPEAN PATENT APPLICATION

(11) **EP 2 009 299 A2**
(43) Date of publication of application: **31.12.2008**
(21) Application number: 08460026.1
(22) Date of filing: 26.06.2008
(51) Int. Cl.: F16B 37/04, F16B 33/00

(54) **Anchor bolt**

(30) Priority: 27.06.2007 PL 38276307
(71) Applicant: Flowair, Glogowski i Brzezinski sp.j., 81-601 Gdynia (PL)
(72) Inventor: Glogowski, Maciej, 81-601 Gdynia (PL); Krzeszowski, Sebastian, 83-300 Kartuzy (PL); Szymanski, Pawel, 80-114 Gdansk (PL)
(74) Representative: Czub, Krzysztof

(57) **Abstract**

The anchor bolt for the joining of structural elements, characterised in that a body (1) of the bolt is shaped as a sleeve with an internal thread (2) along the whole length and an external thread (3) that becomes a cylindrical part (4) with a bolt head (5), and to the cylindrical part (4) and to the bottom part of the bolt head (5) there is attached at least one supporting blade (6).

## Description

The object of the invention is an anchor bolt for the joining of two structural elements with one serving as the base part (e.g. device housing, cabinet, wall etc.) to which a second part is to be fixed. The solution proposed in the present invention is recommended mainly for base parts made from plastics using methods that do not allow the use of a thread or for parts made from materials that are too soft to be threaded.
The known methods of fastening for structural elements using screws for fixing an element to a base part with thread made:
- directly in the base part, e.g. by threading a die stamping obtained in the process of injection moulding,
- indirectly in the base part by placing a metallic nut inside or on the part, e.g. by "pouring in" the nut with plastic that forms the base part; in the case of base part made of metal - by moulding (so called "nut rivet" or pressing elements, e.g. PEM type) or by welding the nut onto the base part.
   The anchor bolt as per the invention has a body shaped as a sleeve with an internal thread along the whole length and an external thread that becomes a cylindrical part with a bolt head. To the cylindrical part and to the bottom part of the bolt head there is attached at least one supporting blade. The outside part of the bolt head advantageously has a hexagonal shape. The front part of the bolt head on the internal thread end advantageously has a shape into which a Torx-type key, a hexagonal key, a Phillips or an ordinary screwdriver can be fitted.
   The anchor bolt should be made from a material that is harder than the base part. After placing the anchor bolt in the orifice in the base part, the both mentioned parts should be pressed by the nut moving on the external thread at the other side of the base part so as the supporting blade/s is/are driven into the base part. Such an "anchoring" of the bolt fixes it in the base part. After fixing the anchor bolt in the base part, and the modification thereof so as there is no access to the base part from the side of the nut, the free screwing in and out of a threaded detail, e.g. a different bolt, using only the internal thread is possible. This enables fixing different elements to the base part when the access to it is possible only from one side.

Using the solution proposed in the present invention, the "anchoring" of the bolt in the base part prevents the development of play and pivoting of the connection of the structural elements joined together. Furthermore, it enables disconnecting them at a later time without the need for disassembly of the base part (e.g. for modifications, maintenance or repairs of devices). An additional advantage of using the solution described in the present invention is the possibility of the fixing of different structural elements to the base part when the access to it is possible only from one side (e.g. during the production process of devices).
The subject of the invention is shown in the example drawing, where:

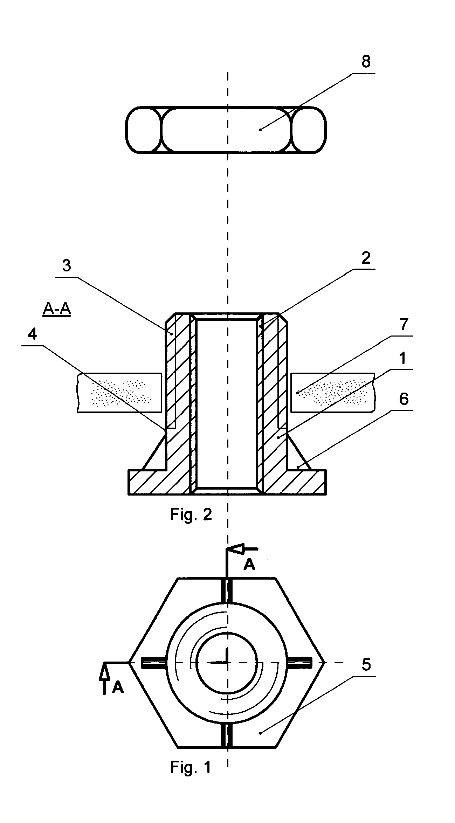

- fig. 1 - shows a view of the anchor bolt from the bottom,
- fig. 2 - shows a section of the anchor bolt with a part of the base part and the nut.

The anchor bolt is made from polyamide with the addition of glass fibre (PA6 FG30). The body 1 of the bolt is shaped as a sleeve with an internal thread 2 along the whole length and an external thread 3 that becomes a cylindrical part 4 with a hexagonal bolt head 5. To the cylindrical part 4 and to the bottom part of the bolt head 5 there are attached four supporting blades 6, spaced symmetrically on the perimeter. After placing the anchor bolt in the orifice in the base part 7 made from ABS plastic, the bolt is pressed against this part at the other side by means of a nut 8 on the external thread 3.

## Claims

1. The anchor bolt with a body with external and internal thread and with a bolt head, **characterised in that** the body (1) of the bolt is shaped as a sleeve with an internal thread (2) along the whole length and an external thread (3) that becomes a cylindrical part (4) with a bolt head (5), and to the cylindrical part (4) and to the bottom part of the bolt head (5) there is attached at least one supporting blade (6).

2. The bolt, according to the claim 1, **characterised in that** the outside part of the bolt head (5) has a hexagonal shape.

3. The bolt, according to the claims 1 or 2, **characterised in that** the front part of the bolt head (5) on the internal thread (2) end has a shape to fit a Torx-type key.

4. The bolt, according to the claims 1 or 2, **characterised in that** the front part of the bolt head (5) on the internal thread (2) end has a shape to fit a hexagonal key.

5. The bolt, according to the claims 1 or 2, **characterised in that** the front part of the bolt head (5) on the internal thread (2) end has a shape to fit a Phillips screwdriver.

6. The bolt, according to the claims 1 or 2, **characterised in that** the front part of the bolt head (5) on the internal thread (2) end has a shape to fit an ordinary screwdriver.
